# EUROPÄISCHE PATENTSCHRIFT

(11) **EP 0 791 034 B1**
(45) Veröffentlichungstag und Bekanntmachung des Hinweises auf die Patenterteilung: **09.01.2002**
(21) Anmeldenummer: 95938380.3
(22) Anmeldetag: 31.10.1995
(51) Int. Cl.: C09B 23/04, C09B 55/00, B41M 5/38, G03G 9/09

(54) **METHIN- UND AZAMETHINFARBSTOFFE AUF BASIS VON TRIFLUORMETHYLPYRIDONEN**
METHINE AND AZAMETHINE DYES MADE FROM TRIFLUOROMETHYLPYRIDONES
COLORANTS AU METHINE ET A L'AZAMETHINE A BASE DE TRIFLUOROMETHYLPYRIDONES

(30) Priorität: 10.11.1994 DE 4440066
(43) Veröffentlichungstag der Anmeldung: 27.08.1997
(73) Patentinhaber: BASF AKTIENGESELLSCHAFT, 67056 Ludwigshafen (DE)
(72) Erfinder: SCHMIDT, Andreas Johann, D-67251 Freinsheim (DE); SENS, Rüdiger, D-68165 Mannheim (DE); ETZBACH, Karl-Heinz, D-67227 Frankenthal (DE)
(86) Internationale Anmeldenummer: EP9504267
(87) Internationale Veröffentlichungsnummer: WO9615195

(56) Entgegenhaltungen:
- EP-A- 0 416 434
- EP-A- 0 591 736
- WO-A-92/19684
- JP-A- 3 099 888
- JP-A- 63 247 092
- JP-A- 64 068 743
- DATABASE WPI Week 8847, Derwent Publications Ltd., London, GB; Class A89, AN 88-334167 & JP 63 247 092 A (FUJI PHOTO FILM CO LTD) 12 Oktober 1988

## Beschreibung

Die vorliegende Erfindung betrifft neue Pyridonfarbstoffe der Formel I 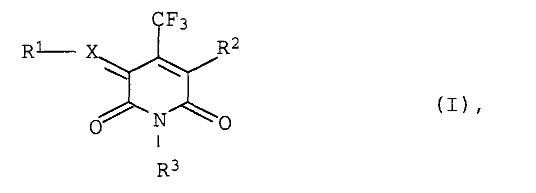 in der
- X: Stickstoff oder CH,
- R¹: einen 5- oder 6-gliedrigen carbocyclischen oder heterocyclischen Rest,
- R²: Cyano, Carbamoyl, C₁-C₆-Alkoxycarbonyl oder C₁-C₄-Alkanoyl und
- R³: C₁-C₁₃-Alkyl, das gegebenenfalls substituiert ist und durch 1 bis 3 Sauerstoffatome in Etherfunktion unterbrochen sein kann, gegebenenfalls substituiertes Phenyl oder einen Rest der Formel NE¹E², wobei E¹ und E² gleich oder verschieden sind und unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₅-C₇-Cycloalkyl, gegebenenfalls substituiertes Phenyl, gegebenenfalls substituiertes Pyridyl, gegebenenfalls substituiertes C₁-C₁₃-Alkanoyl, C₁-C₁₃-Alkoxycarbonyl, gegebenenfalls substituiertes C₁-C₁₃-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder E¹ und E² zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen 5- oder 6-gliedrigen gesättigten heterocyclischen Rest, der gegebenenfalls weitere Heteroatome enthält, stehen, bedeuten, wobei neben der Verbindung der Formel 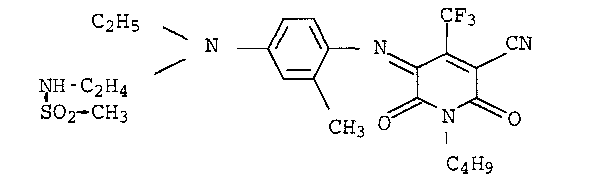 auch solche Verbindungen ausgenommen sind, in denen R¹ einen Rest bedeutet, der sich von 4-Trifluormethylpyridin als Grundkörper ableitet, ein Verfahren zu ihrer thermischen Übertragung sowie ein Verfahren zum Färben oder Bedrucken von synthetischen Materialien mittels der neuen Farbstoffe.

In der JP-A-339 237/1993 ist die Herstellung von 1-Alkyl-3-cyano-4-trifluormethyl-6-hydroxypyrid-2-onen beschrieben. Weiterhin sind aus der JP-A-331 382/1993 sowie aus Bull. Chem. Soc. Japan, Band 66, Seiten 1790 bis 1794, 1993, Azofarbstoffe bekannt, die die obengenannte Verbindung als Kupplungskomponente aufweisen.

Weiterhin sind aus der JP-A-99 888/1991 und der JP-A-247 092/1988 Azamethinfarbstoffe auf Basis von Trifluormethylpyridon bekannt.

Die JP-A-68 743/1989 beschreibt Methinfarbstoffe auf Basis von Trifluormethylpyridon.

Aus der EP-A-416 434 und EP-A-591 736 sind Methin- und Azamethinfarbstoffe auf Basis von Methylpyridon bekannt.

Aufgabe der vorliegenden Erfindung war es, neue Methin- und Azamethinfarbstoffe bereitzustellen, die über vorteilhafte anwendungstechnische Eigenschaften verfügen.

Demgemäß wurden die eingangs näher bezeichneten Pyridonfarbstoffe der Formel I gefunden.

R¹ stellt einen 5- oder 6-gliedrigen carbocyclischen oder heterocyclischen, vorzugsweise aromatischen, Rest dar, der gegebenenfalls substituiert ist und benzoanelliert sein kann.

Reste R¹ können sich z.B. von Komponenten aus der Benzol-, Indol-, Chinolin-, Naphthalin-, Pyrrol-, Thiazol-, Benzimidazol-, Benzthiazol-, Thiophen- oder Pyridinreihe ableiten.

Wichtige Reste R¹ sind z.B. solche der Formeln IIa bis IIj 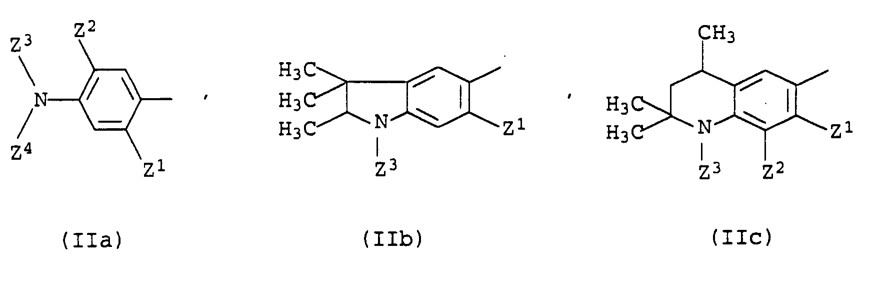 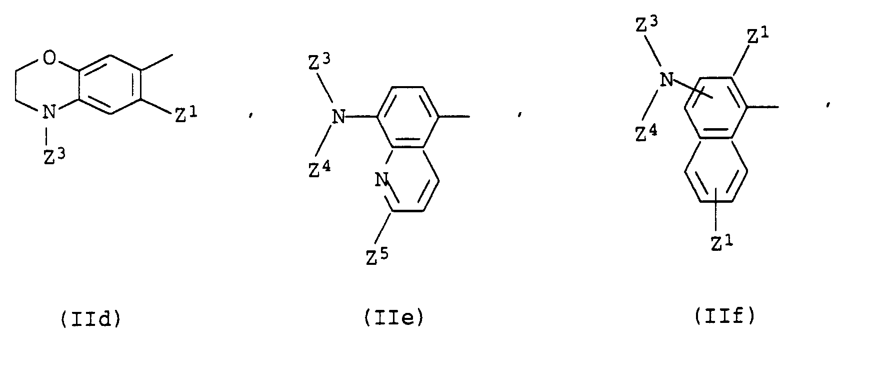 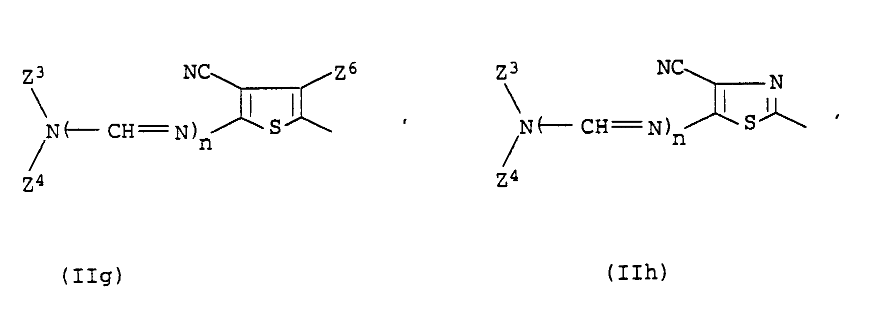 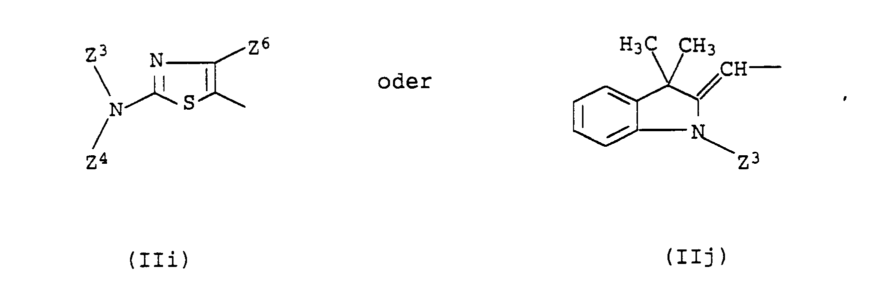 worin
- n: für 0 oder 1,
- Z¹: für Wasserstoff, C₁-C₁₃-Alkyl, das gegebenenfalls durch 1 bis 3 Sauerstoffatome in Etherfunktion unterbrochen ist, Hydroxy, C₁-C₄-Alkoxy, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₁₃-Alkyl, das gegebenenfalls durch 1 bis 3 Sauerstoffatome in Etherfunktion unterbrochen ist, besitzt,
- Z²: für Wasserstoff, C₁-C₄-Alkyl oder C₁-C₄-Alkoxy,
- Z³: und Z⁴ gleich oder verschieden sind und unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,
- Z⁵: für Wasserstoff oder C₁-C₄-Alkyl und
- Z⁶: für Wasserstoff, Halogen, C₁-C₁₃-Alkyl, gegebenenfalls substituiertes Phenyl, gegebenenfalls substituiertes Benzyl, C₅-C₇-Cycloalkyl, Thienyl, Hydroxy, C₁-C₄-Alkoxy, C₁-C₄-Alkylthio oder C₁-C₁₃-Monoalkylamino stehen.

Alle in den obengenannten Formeln auftretenden Alkyl- oder Alkenylgruppen können sowohl geradkettig als auch verzweigt sein.

Wenn in den obengenannten Formeln substituierte Alkylreste auftreten, so können als Substituenten, sofern nicht anders vermerkt, z.B. Cyclohexyl, gegebenenfalls substituiertes Phenyl, C₁-C₈-Alkanoyloxy, C₁-C₈-Alkylaminocarbonyloxy, C₁-C₈-Alkoxycarbonyl, C₁-C₈-Alkoxycarbonyloxy, wobei die Alkylkette der drei letztgenannten Reste gegebenenfalls durch 1 bis 3 Sauerstoffatome in Etherfunktion unterbrochen ist und durch Phenyl oder Phenoxy substituiert sein kann, Cyclohexyloxy, Phenoxy, Halogen, Hydroxy oder Cyano in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind, solche Alkylreste bevorzugt, die durch 1 oder 2 Sauerstoffatome in Etherfunktion unterbrochen sind.

Wenn in den obengenannten Formeln substituierte Phenyl- oder Pyridylreste auftreten, so können als Substituenten, z.B. C₁-C₈-Alkyl, C₁-C₈-Alkoxy, Halogen, dabei insbesondere Chlor oder Brom, Nitro oder Carboxyl in Betracht kommen. Die Phenyl- oder Pyridylreste weisen dabei in der Regel 1 bis 3 Substituenten auf.

Geeignete Reste R³, E¹, E², Z¹, Z², Z³, Z⁴, Z⁵, Z⁶ und Z⁷ sind z.B. Methyl, Ethyl, Propyl, Isopropyl, Butyl, Isobutyl, sec-Butyl oder tert-Butyl.

Reste R³, E¹, E², Z¹, Z³, Z⁴, Z⁶ und Z⁷ sind weiterhin z.B. Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. A1, Seiten 290 bis 293, sowie Vol. A 10, Seiten 284 und 285).]

Reste R³, E¹, E², Z¹, Z³, Z⁴, und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,9-Trioxadecyl oder 3,6,9-Trioxaundecyl.

Reste Z¹, Z² und Z⁶ sind weiterhin z.B. Methoxy, Ethoxy, Propoxy, Isopropoxy, Butoxy, Isobutoxy oder sec-Butoxy.

Reste R³, E¹, E² und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,6-Dichlorphenyl, 2-, 3- oder 4-Nitrophenyl oder 2-, 3- oder 4-Carboxylphenyl.

Reste Z³, Z⁴, Z⁶, E¹ und E² sind weiterhin z.B. Cyclopentyl, Cyclohexyl oder Cycloheptyl.

Reste R³, Z³, Z⁴, E¹ und E² sind weiterhin z.B. Benzyl, 2-Methylbenzyl, 1- oder 2-Phenylethyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste E¹ und E² sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methoxycarbonyl, Ethoxycarbonyl, Propoxycarbonyl, Isopropoxycarbonyl, Butoxycarbonyl, Isobutoxycarbonyl, sec-Butoxycarbonyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl oder Thien-3-ylcarbonyl.

Reste Z¹ sind weiterhin z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Monooder Diisopropylaminosulfonylamino, Mono- oder Dibutylaminosulfonylamino oder (N-Methyl-N-ethylaminosulfonyl)amino.

Reste Z⁶ sind weiterhin, z.B. Fluor, Chlor, Brom, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino,2-Ethylhexylamino, Methylthio, Ethylthio, Propylthio, Isopropylthio oder Butylthio.

Reste Z³ und Z⁴ sind weiterhin z.B. Allyl oder Methallyl.

Reste R² sind z.B. Methoxycarbonyl, Ethoxycarbonyl, Propoxycarbonyl, Isopropoxycarbonyl, Butoxycarbonyl, Pentyloxycarbonyl, Hexyloxycarbonyl, Formyl, Acetyl, Propionyl, Butyryl oder Isobutyryl.

Wenn E¹ und E² oder Z³ und Z⁴ jeweils zusammen mit dem sie verbindenden Stickstoffatom einen 5- oder 6-gliedrigen gesättigten heterocyclischen Rest, der gegebenenfalls weitere Heteroatome enthält, bedeuten, so können dafür z.B. Pyrrolidinyl, Piperidinyl, Morpholinyl, Piperazinyl oder N-(C₁-C₄-Alkyl)piperazinyl in Betracht kommen.

Bevorzugt sind Pyridonfarbstoffe der Formel I, in der X CH bedeutet.

Weiterhin bevorzugt sind Pyridonfarbstoffe der Formel I, in der R² Cyano bedeutet.

Weiterhin bevorzugt sind Pyridonfarbstoffe der Formel I, in der R³ C₁-C₁₃-Alkyl, das gegebenenfalls durch 1 bis 3 Sauerstoffatome in Etherfunktion unterbrochen ist, bedeutet.

Besonders bevorzugt sind Pyridonfarbstoffe der Formel I, in der R³ C₁-C₆-Alkyl, das gegebenenfalls durch 1 oder 2 Sauerstoffatome in Etherfunktion unterbrochen ist, bedeutet.

Weiterhin bevorzugt sind Pyridonfarbstoffe der Formel I, in der R¹ einen Rest bedeutet, der sich von einer Komponente aus der Benzol- oder Thiazolreihe ableitet, insbesondere einen Rest der Formel IIa oder IIi.

Besonders hervorzuheben sind Pyridonfarbstoffe der Formel Ia 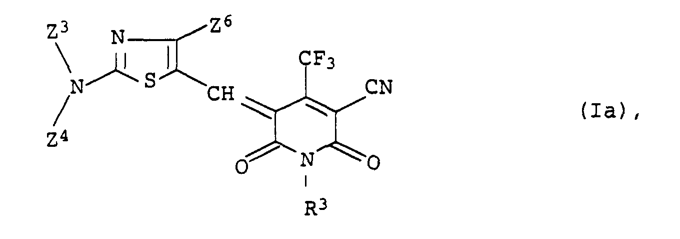 in der
- R³: C₁-C₈-Alkyl,
- Z³ und Z⁴: unabhängig voneinander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl und
- Z⁶: verzweigtes C₃-C₁₀-Alkyl oder Phenyl, insbesondere verzweigtes C₃-C₈-Alkyl, bedeuten.

Ganz besonders hervorzuheben sind Pyridonfarbstoffe der Formel Ia, in der Z⁶ verzweigtes C₃-C₆-Alkyl, insbesondere verzweigtes C₅-Alkyl, bedeutet, wobei Neopentyl besonders zu nennen ist.

Weiterhin ganz besonders hervorzuheben sind Pyridonfarbstoffe der Formel Ia, in der, wenn die Reste Z³ und Z⁴ jeweils C₁-C₈-Alkyl bedeuten, die Summe der in den beiden Resten Z³ und Z⁴ vorhandenen Kohlenstoffatome mindestens 7, insbesondere mindestens 8, beträgt.

Die erfindungsgemäßen Pyridonfarbstoffe der Formel I können nach an sich bekannten Methoden hergestellt werden.

Beispielsweise können diejenigen Pyridonfarbstoffe der Formel I, in der X CH bedeutet, durch Kondensation von Aldehyden der Formel III

R¹-CHO (III),

in der R¹ die obengenannte Bedeutung besitzt, mit Trifluormethylpyridonen der Formel IV 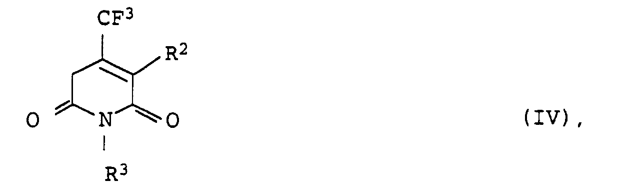 in der R² und R³ jeweils die obengenannte Bedeutung besitzen, erhalten werden.

Diejenigen Pyridonfarbstoffe der Formel I, in der X Stickstoff bedeutet, können z.B. durch Kondensation von Nitrosoverbindungen der Formel V

R¹-NO (V),

in der R¹ die obengenannte Bedeutung besitzt, oder durch oxidative Kupplung von Aminoverbindungen der Formel VI

R¹-NH² (VI),

in der R¹ die obengenannte Bedeutung besitzt, mit den Trifluormethylpyridonen IV erhalten werden.

Bei den Zwischenprodukten für die Herstellung der neuen Pyridonfarbstoffe handelt es sich in der Regel um an sich bekannte Verbindungen.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Pyridonfarbstoffe der Formel I befinden.

Zur Herstellung der für das erfindungsgemäße Verfahren benötigten Farbstoffträger werden die Farbstoffe der Formel I in einem geeignete organischen Lösungsmittel oder in Mischungen von Lösungsmitteln mit einem oder mehreren Bindemitteln, gegebenenfalls unter Zugabe von Hilfsmitteln zu einer Druckfarbe verarbeitet. Diese enthält die Farbstoffe der Formel I vorzugsweise in molekular-dispers gelöster Form. Die Druckfarbe kann mittels einer Rakel auf den inerten Träger aufgetragen und die Färbung z.B. an der Luft oder mit einem Föhn getrocknet werden. Geeignete organische Lösungsmittel für die Farbstoffe der Formel I sind z.B. solche, in denen die Löslichkeit der Farbstoffe der Formel I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne das dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel : Farbstoff beträgt im allgemeinen 1 : 1 bis 10 : 1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 ms erfolgen kann. Dabei migriert der Farbstoff aus dem Transferblatt und diffundiert in die Oberflächenbeschichtung des Aufnahmemediums.

Die erfindungsgemäßen Farbstoffe der Formel I zeichnen sich beim Farbstofftransfer durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (höchst mögliche Brillanz von Grund- oder Mischfarben und tiefes neutrales Schwarz).

Es wurde weiterhin gefunden, daß man synthetische Materialien vorteilhaft färben oder bedrucken kann, wenn man sie mit einem oder mehreren der erfindungsgemäßen Farbstoffe behandelt. Synthetischen Materialien sind z.B. Polyester, Polyamide oder Polycarbonate. Insbesondere zu nennen sind Materialien in textiler Form, wie Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, oder Polyamid. Die Färbe- und Druckbedingungen sind an sich bekannt. Man erhält dabei Färbungen oder Drucke mit hoher Lichtechtheit, hoher Brillanz und sehr guten Naßechtheiten, z.B. sehr guter Wasch- oder Schweißechtheit.

Die erfindungsgemäßen Farbstoffe können auch zum Färben von keratinischen Fasern, z.B. bei der Haarfärbung oder der Färbung von Pelzen, verwendet werden.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

### A) Herstellung

### Beispiel 1

a) In 150 ml Aceton wurden 128 g Kaliumthiocyanat vorgelegt und bei 20° bis 25°C mit 185 ml 3,3-Dimethylbuttersäurechlorid versetzt. Man rührte 8 h bei Raumtemperatur und tropfte anschließend 234 ml Dibutylamin zu. Nach 4 h wurden 120 g Eis und 142 ml 50 gew.-%ige Natronlauge zugesetzt, wobei die Temperatur bei max. 40°C gehalten wurde. Nun gab man eine Lösung von 132 g Chloressigsäure in 120 ml Wasser zu und erhitzte für 8 h auf 80°C. Anschließend wurde bei 60°C eine Phasentrennung durchgeführt. Die organische Phase wurde mit Methylenchlorid verdünnt, mehrfach mit verdünnter Salzsäure und anschließend mit Wasser ausgeschüttelt. Nach Trocknen über Natriumsulfat wurde das Lösungsmittel am Rotationsverdampfer abdestilliert. Man erhielt 311 g eines dunklen Öls, das 69,5 % (GC) der Verbindung der Formel 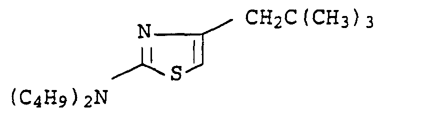 enthielt.
b) Zu einer bei 0° bis 5°C hergestellten Lösung von 441 ml N,N-Dimethylformamid und 110 g Phosphoroxidtrichlorid wurde unter Eiskühlung eine Lösung von 105 g 2-Dibutylamino-4-(2,2-dimethylpropyl)thiazol (Stufe a)) in 95 ml N,N-Dimethylformamid zugetropft. Nach zwei Stunden Rühren wurde auf Eis/Wasser gegeben, über Nacht gerührt und anschließend mit Essigester extrahiert. Die organische Phase wurde über Natriumsulfat getrocknet und das Lösungsmittel dann am Rotationsverdampfer abdestilliert. Man erhielt 113,6 g eines braunen Öls, das 83,5 % (GC) der Verbindung der Formel 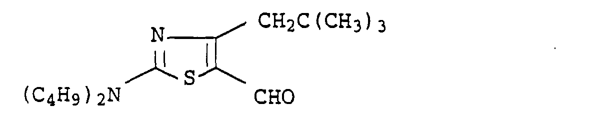 enthielt.
c) 6,54 g 3-Cyano-6-hydroxy-1-methyl-4-trifluormethyl-1-H-pyridin-2-on und 11,16 g 2-Dibutylamino-4-(2,2-dimethylpropyl)-5-formylthiazol (Stufe b)) wurden bei Raumtemperaturen in 25 ml Essigsäureanhydrid suspendiert und anschließend für 1 h auf 80°C erhitzt. Der beim Abkühlen ausgefallene Niederschlag wurde abgesaugt, mit Wasser und Methanol gewaschen und aus Essigester umkristallisiert. Man erhielt 8,4 g (54,8 % der Theorie) einer roten kristallinen Verbindung der Formel 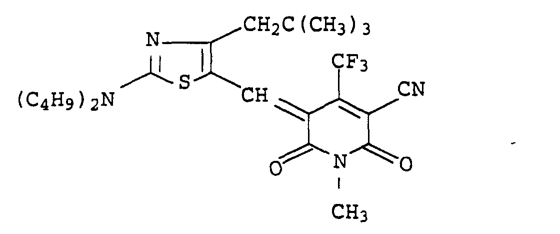 Fp.: 169°C; λₘₐₓ (in CH₂Cl₂): 545 nm
¹H-NMR (CDCl₃, 250 MHz):δ = 8,02 (s; 1H), 3,80 (t, J = 8 Hz; 2H), 3,58 (t, J = 8 Hz; 2H), 3,38 (s; 3H), 2,80 (s; 2H), 1,70 (m; 4H), 1,38 (m; 4H), 1,00 (s; 9H), 0,95 (m; 6H).

| | C | H | N | O | F | S |
|---|---|---|---|---|---|---|
| ber. | 58,75 | 6,52 | 10,98 | 6,27 | 11,17 | 6,27 |
| gef. | 58,80 | 6,40 | 10,90 | 6,30 | 11,20 | 6,30 |

### Beispiel 2

6,34 g 3-Cyano-6-hydroxy-1-methyl-4-trifluormethyl-1-H-pyridin-2-on und 4,37 g 2-Dibutylamino-4-phenyl-5-nitrosothiazol wurden bei Raumtemperatur in 35 ml Essigsäureanhydrid suspendiert und anschließend für 1 h auf 80°C erhitzt. Der beim Abkühlen ausgefallene Niederschlag wurde abgesaugt, mit Wasser und Hexan gewaschen und aus Essigester umkristallisiert. Man erhielt 7,4 g (71,7 % der Theorie) einer blauen kristallinen Verbindung der Formel 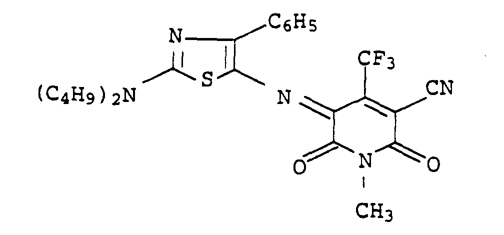 Fp.: 231-33°C; λₘₐₓ (in CH₂Cl₂): 598 nm
¹H-NMR (CDCl₃, 200 MHz): δ = 8,00 (d, J = 7 Hz; 2H), 7,62 (dd, J = 7 Hz, J = 7 Hz; 1 H), 7,52 (d, J = 7 Hz; 2H), 4,02 (t, J = 7 Hz; 2H), 3,65 (t, J = 8 Hz; 2H), 3,38 (s; 3 H), 1,80 (m; 4 H), 1,42 (m; 4H), 1,00 (m; 6H).

In analoger Weise werden die in den folgenden Tabellen aufgeführten Farbstoffe erhalten.

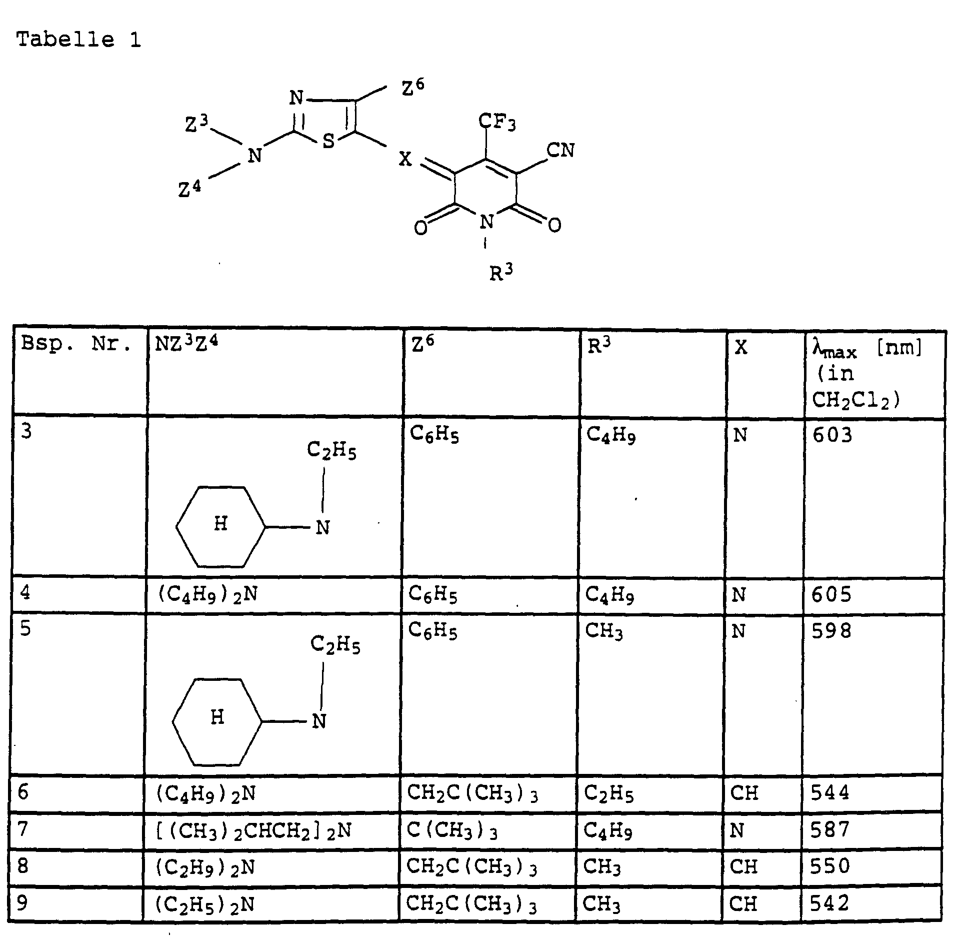

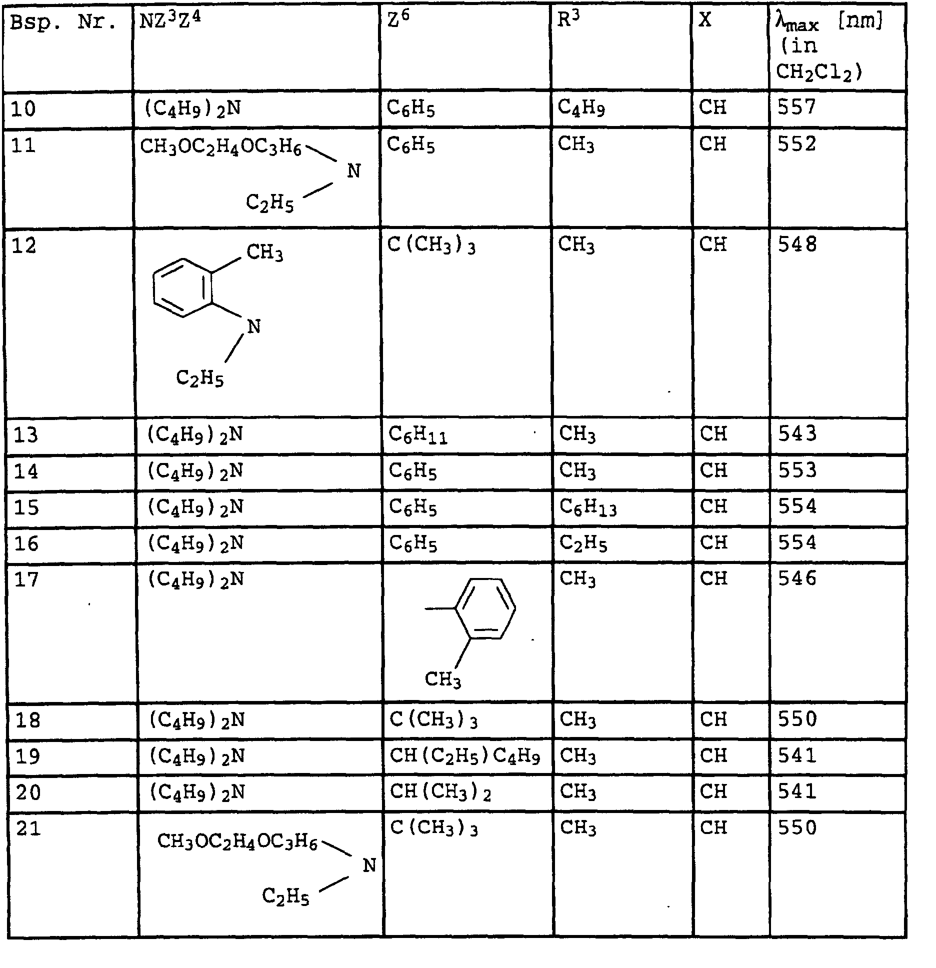

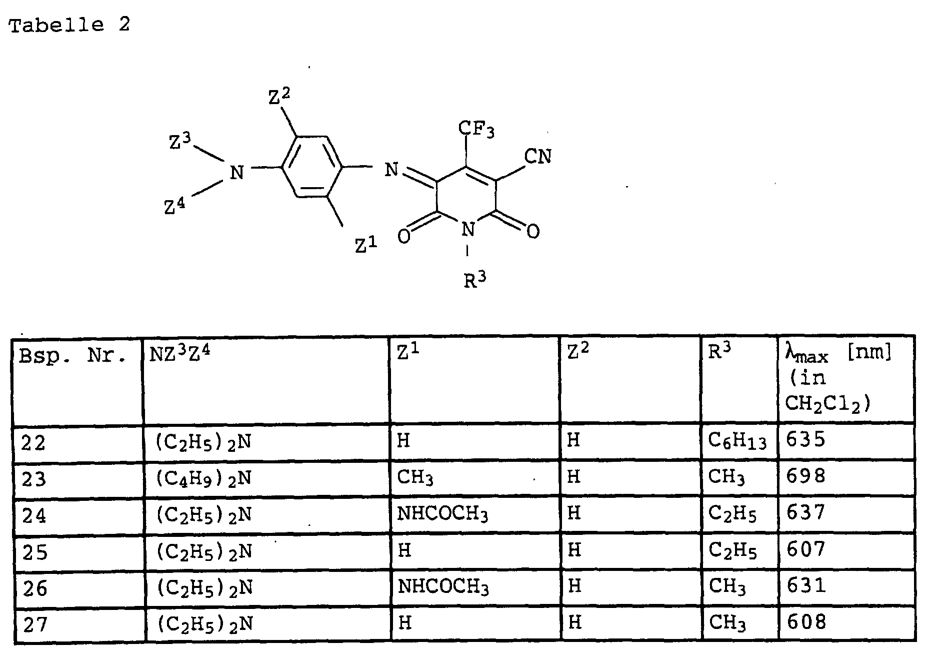

### B) Farbstofftransfer

### Allgemeine Vorschrift:

a) 10 g Farbstoff werden, gegebenenfalls unter kurzzeitigem Erwärmen auf 80 bis 90°C, in 100 g einer 10 gew.%igen Lösung eines Bindemittels in ein Methylethylketon/Toluol/Cyclohexanon-Gemisch (4,5:2:2 v/v/v) eingerührt.
   Die resultierende Druckfarbe wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsüblichem Videoprintpapier (Typ VY-S der Fa. Hitachi) verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) ermittelt.

Die erhaltenen Ergebnisse sind in der folgenden Tabelle 3 aufgeführt.

(Bei den Angaben von Q* bezieht sich der erste Wert jeweils auf ein Bindemittel auf Basis von Polyester, der zweite jeweils auf ein Bindemittel auf Basis von Polyvinylbutyral.)

**Tabelle 3**

| Farbstoff Nr. | Q* [mJ/Dot] |
|---|---|
| 1 | 0,76 |
| | 0,76 |
| 2 | 1,01 |
| | 1,12 |
| 3 | 1,02 |
| | 1,16 |
| 4 | 1,01 |
| | 1,10 |
| 5 | 1,58 |
| | 1,34 |
| 6 | 0,80 |
| | 0,82 |
| 7 | 1,01 |
| | 1,12 |
| 8 | 0,80 |
| | 0,81 |
| 9 | 0,83 |
| | 0,81 |
| 10 | 0,84 |
| | 0,88 |
| 11 | 0,84 |
| | 0,89 |
| 12 | 0,77 |
| | 0,87 |
| 13 | 0,86 |
| | 0,88 |
| 14 | 0,81 |
| | 0,87 |
| 15 | 0,85 |
| | 0,87 |
| 16 | 0,83 |
| | 0,86 |
| 17 | 0,84 |
| | 0,86 |
| 18 | 0,84 |
| | 0,79 |
| 19 | 0,78 |
| | 0,83 |
| 20 | 0,80 |
| | 0,77 |
| 21 | 0,75 |
| | 0,78 |
| 22 | |
| | 1,08 |
| 23 | 1,04 |
| | 1,01 |
| 24 | |
| | 0,95 |
| 25 | 1,18 |
| | |
| 26 | 0,97 |
| | 0,94 |

### C) Färbevorschrift

Polyestergewebe wird bei 55°C in ein Färbebad eingebracht, das X % Farbstoff (bezogen auf das Gewicht des Gewebes), 1 g/l des Natriumsalzes eines Kondensationsproduktes aus Naphthalin-2-sulfonsäure und Formaldehyd und 0,5 ml/l Pufferlösung (pH 4,5) enthält. Das Bad wird dann innerhalb von 30 Minuten auf 130°C erhitzt und noch 60 Minuten bei dieser Temperatur gehalten.

Nach dem Abkühlen und Spülen wird das Gewebe in einem Bad, das 4 g/l 32 gew.-%ige Natronlauge, 2 g/l Natriumdithionit und 1 g/l eines Anlagerungsproduktes von 12 mol Ethylenoxid an 1 mol Oleylamin enthält, 30 Minuten bei 70°C reduktiv gereinigt und anschließend gespült und getrocknet.

Mit den Farbstoffen der Beispiele 1, 6 und 14 wurden hochlichtechte brillante rote Färbungen erhalten, die eine gute Wasch- und Schweißechtheit aufweisen.
Bsp. 1 : X = 0,5, 0,75, 1,0 und 1,5 [%]
Bsp. 6 : X = 0,1, 0,5, 0,75 [%]
Bsp. 14 : X = 0,35, 0,5, 0,8 und 1,0 [%]

## Patentansprüche

1. Pyridonfarbstoffe der Formel I 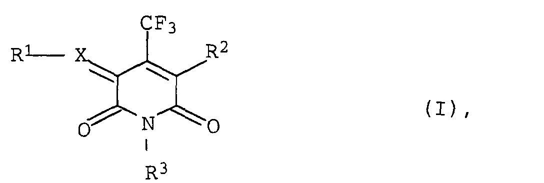 in der
X Stickstoff oder CH,
R¹ einen 5- oder 6-gliedrigen carbocyclischen oder heterocyclischen Rest,
R² Cyano, Carbamoyl, C₁-C₆-Alkoxycarbonyl oder C₁-C₄-Alkanoyl und
R³ C₁-C₁₃-Alkyl, das gegebenenfalls substituiert ist und durch 1 bis 3 Sauerstoffatome in Etherfunktion unterbrochen sein kann, gegebenenfalls substituiertes Phenyl oder einen Rest der Formel NE¹E², wobei E¹ und E² gleich oder verschieden sind und unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₅-C₇-Cycloalkyl, gegebenenfalls substituiertes Phenyl, gegebenenfalls substituiertes Pyridyl, gegebenenfalls substituiertes C₁-C₁₃-Alkanoyl, C₁-C₁₃-Alkoxycarbonyl, gegebenenfalls substituiertes C₁-C₁₃-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder E¹ und E² zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen 5- oder 6-gliedrigen gesättigten heterocyclischen Rest, der gegebenenfalls weitere Heteroatome enthält, stehen, bedeuten,
wobei neben der Verbindung der Formel 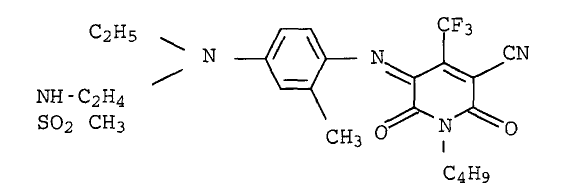 auch solche Verbindungen ausgenommen sind, in denen R¹ einen Rest bedeutet, der sich von 4-Trifluormethylpyridin als Grundkörper ableitet.

2. Pyridonfarbstoffe nach Anspruch 1, **dadurch gekennzeichnet, daß** X CH bedeutet.

3. Pyridonfarbstoffe nach Anspruch 1, **dadurch gekennzeichnet, daß** R² Cyano bedeutet.

4. Pyridonfarbstoffe nach Anspruch 1, **dadurch gekennzeichnet, daß** R³ C₁-C₁₃-Alkyl, das gegebenenfalls durch 1 bis 3 Sauerstoffatome in Etherfunktion unterbrochen ist, bedeutet.

5. Pyridonfarbstoffe nach Anspruch 1, **dadurch gekennzeichnet, daß** R¹ einen Rest bedeutet, der sich von einer Komponente aus der Benzol-, Indol-, Chinolin-, Naphthalin-, Pyrrol-, Thiazol-, Benzimidazol-, Benzthiazol-, Thiophen- oder Pyridinreihe ableitet.

6. Pyridonfarbstoffe nach Anspruch 1, **dadurch gekennzeichnet, daß** R¹ einen Rest der Formel 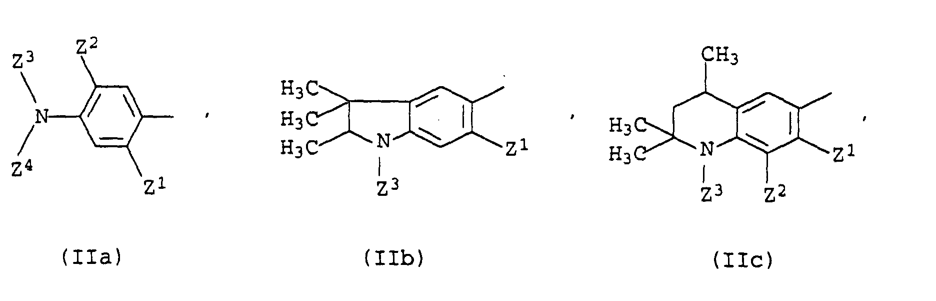 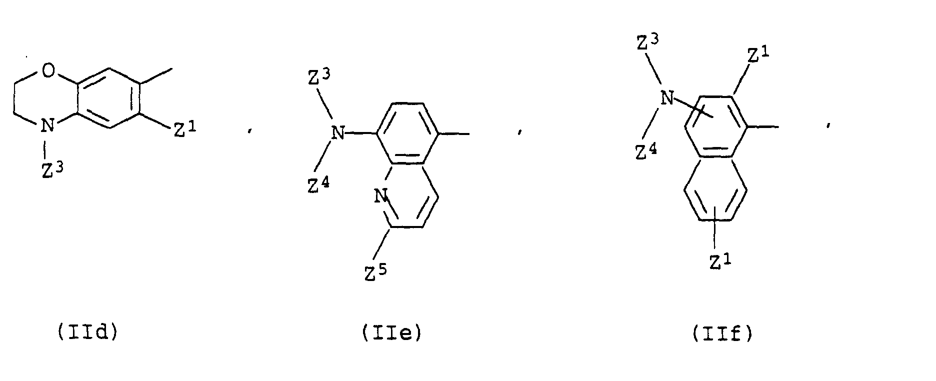 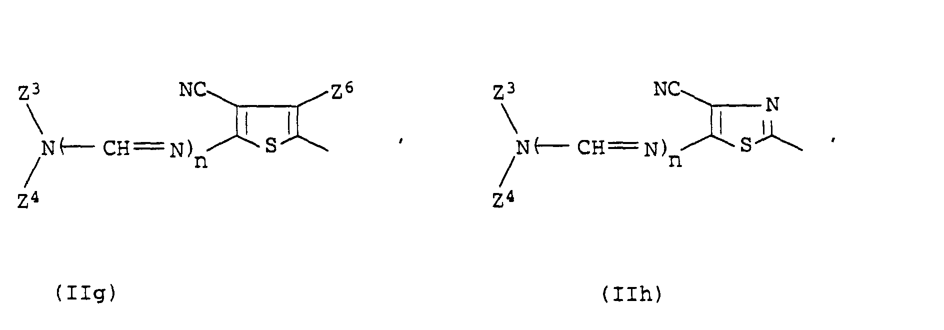 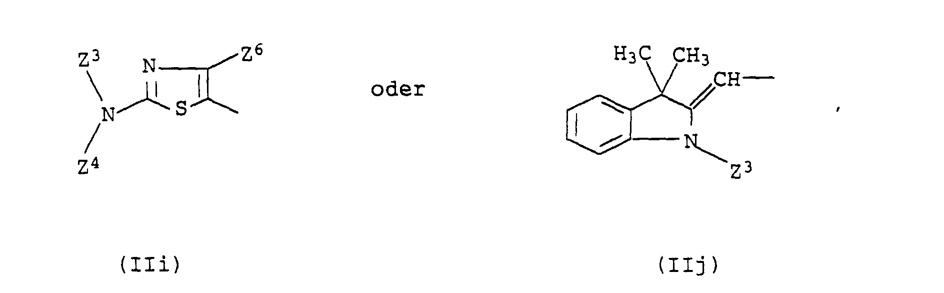 bedeutet, worin
n für 0 oder 1,
Z¹ für Wasserstoff, C₁-C₁₃-Alkyl, das gegebenenfalls durch 1 bis 3 Sauerstoffatome in Etherfunktion unterbrochen ist, Hydroxy, C₁-C₄-Alkoxy, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₁₃-Alkyl, das gegebenenfalls durch 1 bis 3 Sauerstoffatome in Etherfunktion unterbrochen ist, besitzt,
Z² für Wasserstoff, C₁-C₄-Alkyl oder C₁-C₄-Alkoxy,
Z³ und Z⁴ gleich oder verschieden sind und unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,
Z⁵ für Wasserstoff oder C₁-C₄-Alkyl und
Z⁶ für Wasserstoff, Halogen, C₁-C₁₃-Alkyl, gegebenenfalls substituiertes Phenyl, gegebenenfalls substituiertes Benzyl, C₅-C₇-Cycloalkyl, Thienyl, Hydroxy, C₁-C₄-Alkoxy, C₁-C₄-Alkylthio oder C₁-C₁₃-Monoalkylamino stehen.

7. Verfahren zur Übertragung von Farbstoffen von einem Träger auf ein mit Kunststoff beschichtetes Papier durch Diffusion oder Sublimation mit Hilfe einer Energiequelle, **dadurch gekennzeichnet, daß** man einen Träger verwendet, auf dem sich ein oder mehrere Pyridonfarbstoffe gemäß Anspruch 1 befinden.

8. Verfahren zum Färben oder Bedrucken von synthetischen Materialien, **dadurch gekennzeichnet, daß** man die synthetischen Materialien mit einem oder mehreren Pyridonfarbstoffen gemäß Anspruch 1 behandelt.

## Claims

1. A pyridone dye of the formula I 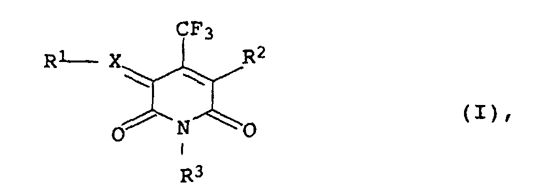 where
X is nitrogen or CH,
R¹ is a 5-membered or 6-membered carbocyclic or heterocyclic radical,
R² is cyano, carbamoyl, C₁-C₆-alkoxycarbonyl or C₁-C₄-alkanoyl and
R³ is C₁-C₁₃-alkyl which is unsubstituted or substituted and may be interrupted by from 1 to 3 ether oxygen atoms, or is unsubstituted or substituted phenyl or a radical of the formula NE¹E², where E¹ and E² are identical or different and, independently of one another, are each hydrogen, C₁-C₁₃-alkyl which is unsubstituted or substituted and may be interrupted by from 1 to 3 ether oxygen atoms, or are each C₅-C₇-cycloalkyl, unsubstituted or substituted phenyl, unsubstituted or substituted pyridyl, unsubstituted or substituted C₁-C₁₃-alkanoyl, C₁-C₁₃-alkoxycarbonyl, unsubstituted or substituted C₁-C₁₃-alkylsulfonyl, C₅-C₇-cycloalkylsulfonyl, unsubstituted or substituted phenylsulfonyl, unsubstituted or substituted pyridylsulfonyl, unsubstituted or substituted benzoyl, pyridylcarbonyl or thienylcarbonyl or E¹ and E², together with the nitrogen atom linking them, are unsubstituted or C₁-C₄-alkyl-substituted succinimido, unsubstituted or C₁-C₄-alkyl-substituted phthalimido or a 5-membered or 6-membered saturated heterocyclic radical which may contain further heteroatoms, where in addition to the compound of the formula 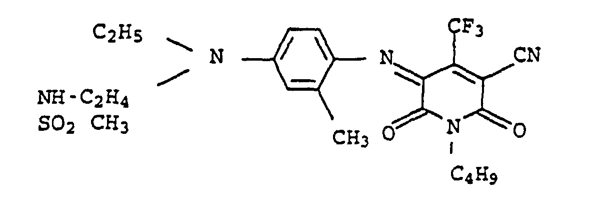 those compounds in which R¹ is a radical which is derived from 4-trifluoromethylpyridine as the parent structure are also excluded.

2. A pyridone dye as claimed in claim 1, wherein X is CH.

3. A pyridone dye as claimed in claim 1, wherein R² is cyano.

4. A pyridone dye as claimed in claim 1, wherein R³ is C₁-C₁₃-alkyl which may be interrupted by from 1 to 3 ether oxygen atoms.

5. A pyridone dye as claimed in claim 1, wherein R¹ is a radical which is derived from a component from the benzene, indole, quinoline, naphthalene, pyrrole, thiazole, benzimidazole, benzothiazole, thiophene or pyridine series.

6. A pyridone dye as claimed in claim 1, wherein R¹ is a radical of the formula 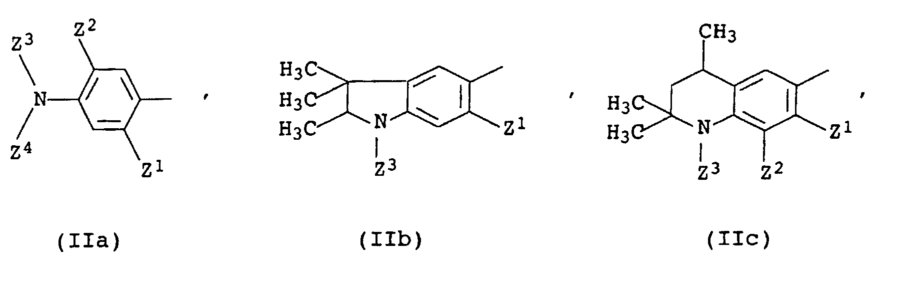 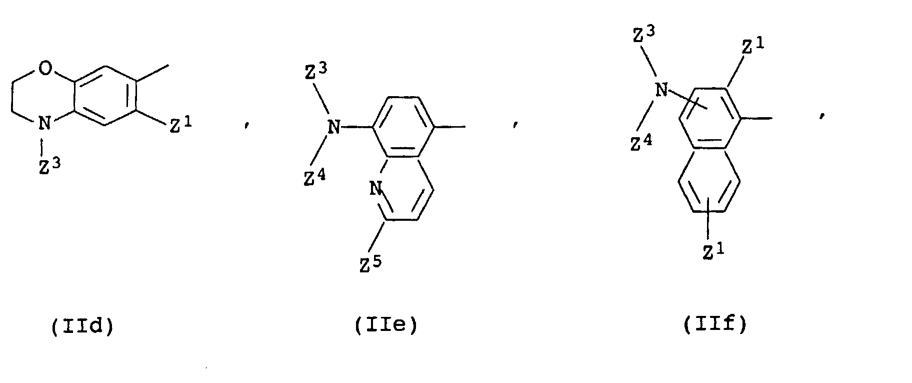 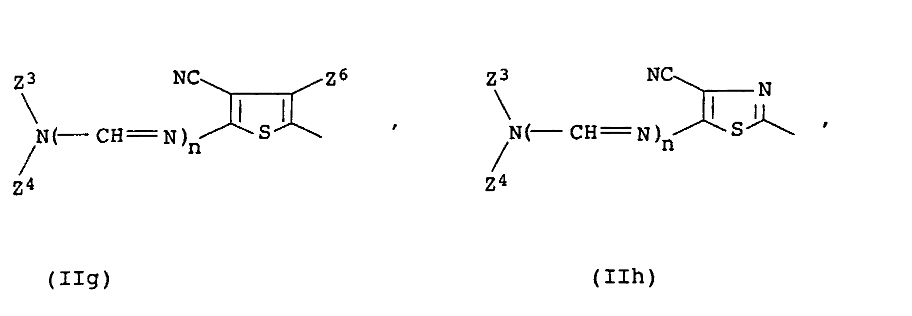 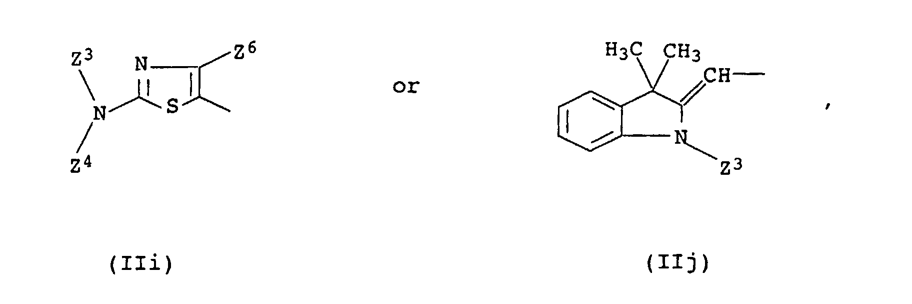 where
n is 0 or 1,
Z¹ is hydrogen, C₁-C₁₃-alkyl which may be interrupted by from 1 to 3 ether oxygen atoms, or is hydroxyl, C₁-C₄-alkoxy, C₁-C₄-alkylsulfonylamino, C₁-C₄-mono- or dialkylaminosulfonylamino or a radical -NHCOZ⁷ or -NHCO₂Z⁷, where Z⁷ is phenyl, benzyl, tolyl or C₁-C₁₃-alkyl which may be interrupted by from 1 to 3 ether oxygen atoms,
Z² is hydrogen, C₁-C₄-alkyl or C₁-C₄-alkoxy,
Z³ and Z⁴ are identical or different and, independently of one another, are each hydrogen or C₁-C₁₃-alkyl which is unsubstituted or substituted and may be interrupted by from 1 to 3 ether oxygen atoms, or are each C₃-C₄-alkenyl, C₅-C₇-cycloalkyl, phenyl or tolyl or, together with the nitrogen atom linking them, are a 5-membered or 6-membered saturated heterocyclic radical which may contain further heteroatoms,
Z⁵ is hydrogen or C₁-C₄-alkyl and
Z⁶ is hydrogen, halogen, C₁-C₁₃-alkyl, unsubstituted or substituted phenyl, unsubstituted or substituted benzyl, C₅-C₇-cycloalkyl, thienyl, hydroxyl, C₁-C₄-alkoxy, C₁-C₄-alkylthio or C₁-C₁₃-monoalkylamino.

7. A process for transferring dyes from a substrate to a plastic-coated paper by diffusion or sublimation with the aid of an energy source, which comprises using a substrate on which one or more pyridone dyes as claimed in claim 1 are present.

8. A process for dyeing or printing synthetic materials, which comprises treating the synthetic materials with one or more pyridone dyes as claimed in claim 1.

## Revendications

1. Colorants de pyridone de formule I 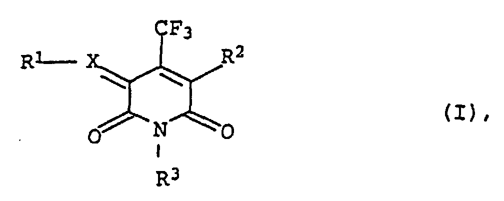 dans laquelle
X est un atome d'azote ou CH,
R¹ est un radical carbocyclique ou hétérocyclique à 5 ou 6 chaînons,
R² est un groupe cyano, carbamoyle, (alcoxy en C₁-C₆)carbonyle ou alcanoyle en C₁-C₄,
R³ est un groupe alkyle en C₁-C₁₃, qui est éventuellement substitué et peut être interrompu par 1 à 3 atomes d'oxygène en fonction éther, un groupe phényle éventuellement substitué, ou un radical de formule NE¹E² dans laquelle E¹ et E² sont identiques ou différents et représentent chacun indépendamment de l'autre un atome d'hydrogène, un groupe alkyle en C₁-C₁₃ qui est éventuellement substitué et peut être interrompu par 1 à 3 atomes d'oxygène en fonction éther, cycloalkyle en C₅-C₇, phényle éventuellement substitué, pyridyle éventuellement substitué, alcanoyle en C₁-C₁₃ éventuellement substitué, (alcoxy en C₁-C₁₃)carbonyle, alkylsulfonyle en C₁-C₁₃ éventuellement substitué, cycloalkylsulfonyle en C₅-C₇, phénylsulfonyle éventuellement substitué, pyridylsulfonyle éventuellement substitué, benzoyle éventuellement substitué, pyridylcarbonyle ou thiénylcarbonyle, ou encore E¹ et E², avec l'atome d'azote qui les relie, représentent un radical succinimido éventuellement substitué par des substituants alkyle en C₁-C₄, phtalimido éventuellement substitué par des substituants alkyle en C₁-C₄, ou un radical hétérocyclique saturé à 5 ou 6 chaînons, qui éventuellement contient d'autres hétéroatomes,
où, outre le composé de formule 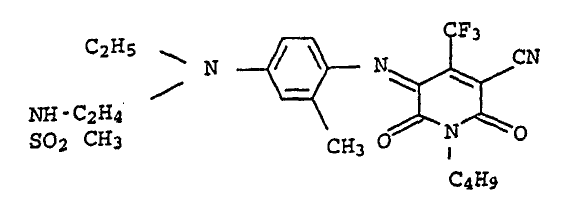 on exclut aussi les composés dans lesquels R¹ est un radical qui dérive de la 4-trifluorométhylpyridine en tant que substance de base.

2. Colorants de pyridone selon la revendication 1, **caractérisés en ce que** X est CH.

3. Colorants de pyridone selon la revendication 1, **caractérisés en ce que** R² est un groupe cyano.

4. Colorants de pyridone selon la revendication 1, **caractérisés en ce que** R³ est un groupe alkyle en C₁-C₁₃ qui est éventuellement interrompu par 1 à 3 atomes d'oxygène en fonction éther.

5. Colorants de pyridone selon la revendication 1, **caractérisés en ce que** R¹ est un radical qui dérive d'un composant de la série du benzène, de l'indole, de la quinoléine, du naphtalène, du pyrrole, du thiazole, du benzimidazole, du benzothiazole, du thiophène ou de la pyridine.

6. Colorants de pyridone selon la revendication 1, **caractérisés en ce que** R¹ est un radical de formule 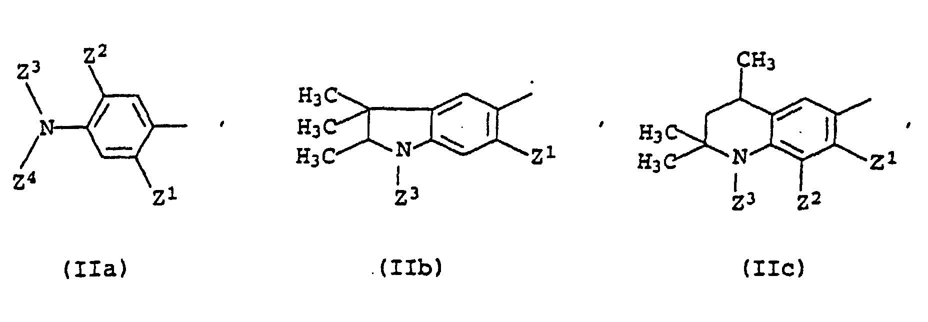 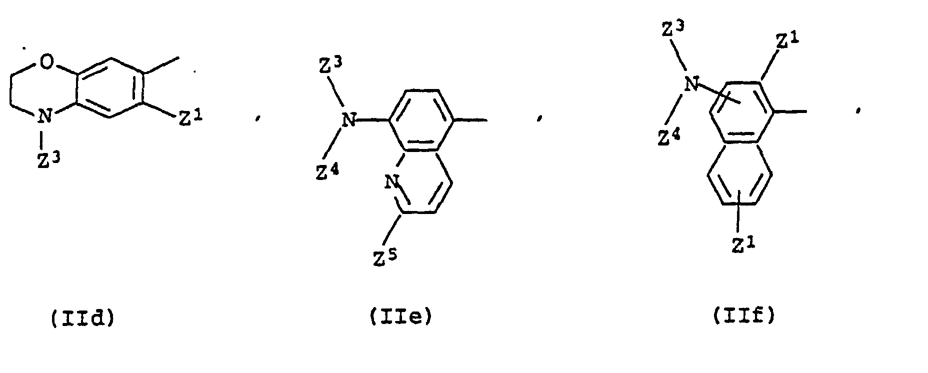 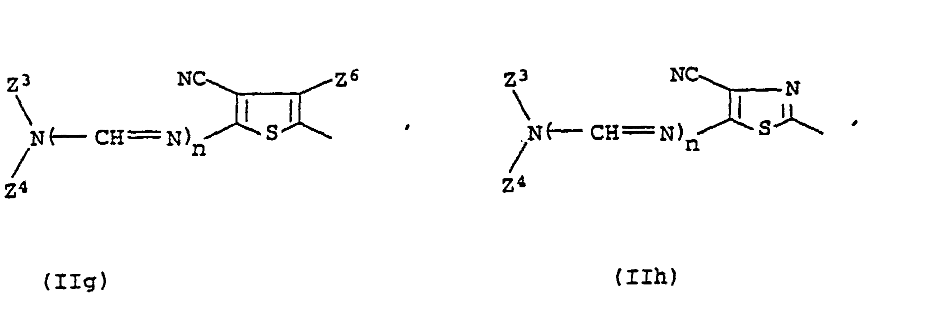 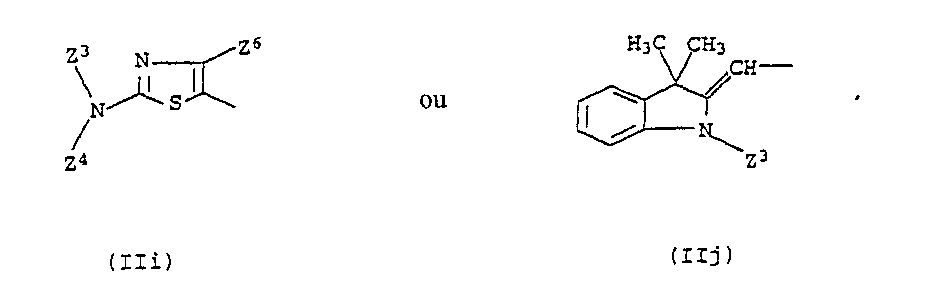 dans laquelle
n vaut 0 ou 1,
Z¹ est un atome d'hydrogène, un groupe alkyle en C₁-C₁₃ éventuellement interrompu par 1 à 3 atomes d'oxygène en fonction éther, hydroxy, alcoxy en C₁-C₄, alkylsulfonylamino en C₁-C₄, mono- ou di(alkyle en C₁-C₄)aminosulfonylamino, ou un radical -NHCOZ⁷ ou -NHCO₂Z⁷ où Z⁷ représente un groupe phényle, benzyle, tolyle ou alkyle en C₁-C₁₃ éventuellement interrompu par 1 à 3 atomes d'oxygène en fonction éther,
Z² est un atome d'hydrogène ou un groupe alkyle en C₁-C₄ ou alcoxy en C₁-C₄,
Z³ et Z⁴ sont identiques ou différents et représentent chacun indépendamment de l'autre un atome d'hydrogène, un groupe alkyle en C₁-C₁₃ éventuellement substitué et pouvant être interrompu par 1 à 3 atomes d'oxygène en fonction éther, alcényle en C₃-C₄, cycloalkyle en C₅-C₇, phényle ou tolyle, ou encore, avec l'atome d'azote qui les relie, un radical hétérocyclique saturé à 5 ou 6 chaînons qui éventuellement contient d'autres hétéroatomes,
Z⁵ est un atome d'hydrogène ou un groupe alkyle en C₁-C₄, et
Z⁶ est un atome d'hydrogène ou un groupe halogéno, alkyle en C₁-C₁₃, phényle éventuellement substitué, benzyle éventuellement substitué, cycloalkyle en C₅-C₇, thiényle, hydroxy, alcoxy en C₁-C₄, alkylthio en C₁-C₄ ou monoalkylamino en C₁-C₁₃.

7. Procédé pour transférer des colorants d'un support sur un papier enduit d'un plastique, par diffusion ou sublimation à l'aide d'une source d'énergie, **caractérisé en ce qu'**on utilise un support sur lequel se trouve un ou plusieurs colorants de pyridone selon la revendication 1.

8. Procédé pour teindre ou imprimer des matériaux synthétiques, **caractérisé en ce qu'**on traite les matériaux synthétiques avec un ou plusieurs colorants de pyridone selon la revendication 1.
